# FASCICULE DE BREVET EUROPEEN

(11) **EP 0 494 129 B1**
(45) Date de publication et mention de la délivrance du brevet: **31.08.1994**
(21) Numéro de dépôt: 92420004.1
(22) Date de dépôt: 02.01.1992
(51) Int. Cl.: C04B 35/58, C01B 21/068, C04B 35/65

(54) **Procédé de nitruration directe de métaux à bas point de fusion**
Verfahren zur Direktnitridierung von Metallen mit niedrigem Schmelzpunkt
Direct nitridation process of metals having a low melting point

(30) Priorité: 03.01.1991 FR 9100376
(43) Date de publication de la demande: 08.07.1992
(73) Titulaire: PECHINEY ELECTROMETALLURGIE, 92400 Courbevoie (FR)
(72) Inventeur: Dubots, Dominique, F-74190 Passy (FR); Faure, Pierre, F-38210 Saint Quentin sur Isère (FR)
(74) Mandataire: Mougeot, Jean-Claude

(56) Documents cités:
- EP-A- 0 165 707
- DE-B- 1 057 005
- GB-A- 2 075 965
- US-A- 4 877 759

## Description

### DOMAINE TECHNIQUE

L'invention concerne un procédé de nitruration directe de métaux à bas point de fusion, c'est-à-dire habituellement fusibles à une température inférieure à leur température de nitruration, conduisant à l'obtention de nitrures ou de produits nitrurés comme les oxynitrures ou les oxycarbonitrures. Il est applicable par exemple à l'obtention des nitures d'Al ou de Mg.

### ETAT DE LA TECHNIQUE

Les nitrures de métaux à bas point de fusion, tel que Al, sont généralement obtenus par une réaction de carbonitruration d'oxydes, par exemple l'alumine, à haute température. Une telle réaction, généralement endothermique, consomme de l'énergie et se déroule habituellement à 1700°C environ dans des fours à défilement ou opérant par batch. Pour obtenir un produit pur, ces fours sont souvent complexes avec des profils de température très pointus en vue d'obtenir une transformation complète et d'éviter des réactions secondaires. Les investissements sont donc importants et les prix de revient élevés.
C'est pourquoi la demanderesse s'est tournée vers la mise au point d'un procédé par synthèse directe.
Mais une telle nitruration directe, par exemple, à partir d'Al et N₂ est très difficile. En effet elle doit être effectuée à une température supérieure au point de fusion d'Al et, autant les métaux en poudre se nitrurent assez bien à l'état solide, autant à l'état liquide leur nitruration est très difficile: on ne connaît pas de solution technique simple pour réaliser la nitruration directe et totale d'un métal liquide..

Dans le document DE 1 057 005 (équivalent du document FR 1 149 539), il est décrit un procédé d'obtention d'objets frittés compactes en AlN dans lesquels les particules d'AlN sont liés entre elles par un ou plusieurs nitrures, pouvant contenir de faibles quantités d'impuretés mais à l'exclusion d'oxydes et de carbures métalliques. Ces nitrures sont formés "in situ" par chauffage en atmosphère nitrurante de pièces moulées sous pression composées de granulés d'AlN, de poudre d'Al puis d'agglomérant et plastifiant temporaires de moulage.

Dans le document GB-A-2 075 965, il est aussi décrit un procédé d'obtention de pièces réfractaires contenant de la silice et d'autres réfractaires, de caractéristiques mécaniques améliorées. Ce résultat est obtenu en liant également la céramique par une phase nitrure (en particulier nitrure de Si) obtenue par nitruration "in situ". Pour cela, les pièces moulées sous pression contiennent, outre la poudre de silice et de réfractaire, de la poudre d'Al aussi fine que possible, et sont ensuite chauffées en atmosphère nitrurante ; par contre dans ce cas Al réduit d'abord la silice pour donner du silicium qui est transformé en nitrure à température élevée.

Quant au document EP-A-165 707, il décrit l'obtention de pièces frittées en nitrure de silicium, par exemple, par frittage-réaction d'une pièce crue mise en forme et pressée à froid comprenant du silicium et du nitrure de silicium, dans une atmopsphère d'azote sous haute pression.

### DESCRIPTION DE L'INVENTION

L'invention est un procédé économique d'obtention en grande quantité de composés à base de nitrure ou d'oxynitrure métallique, par nitruration directe d'au moins un métal en présence d'un support solide en produit réfractaire infusible, inerte vis-à-vis du métal, comportant le mélange en vrac d'une poudre d'au moins un métal susceptible de fondre à la température de la nitruration directe, sa granulométrie ne dépassant pas 2 mm, avec une poudre du support réfractaire ayant une granulométrie inférieure à 630 µm, caractérisé en ce que la quantité de métal dans le mélange de départ ne dépasse pas une teneur maximum, par rapport à la poudre réfractaire, au-delà de laquelle on observerait une fusion apparente du mélange, on chauffe ce mélange en vrac sous un courant de gaz azoté à pression sensiblement atmosphérique jusqu'à démarrer la réaction rapide et exothermique de nitruration du métal, laquelle se déroule à une température que l'on contrôle en jouant sur le débit de gaz azoté pour que ladite réaction s'auto-entretienne jusqu'à nitruration complète du métal sans que l'on note de trace de fusion apparente de la charge, et qu'on obtient un produit sous forme solide très poreux (volume poreux supérieur à 50 %) facile à égruger.

Les métaux objets de la présente invention sont en général ceux dont le point de fusion est inférieur à leur température de nitruration par un gaz azoté. Mais par extension l'invention peut également intéresser les métaux dont le point de fusion est supérieur à leur température de nitruration; dans la mesure où leur nitruration directe provoque des surchauffes locales conduisant à des phénomènes de fusion locale du métal, celui-ci ne serait alors plus nitruré et se retrouverait à l'état métallique dans le nitrure final, pour en altérer significativement la qualité (pureté).

Le gaz azoté utilisé peut être de l'azote, de l'ammoniac ou de l'hydrazine, seuls ou mélangés, ou dilués par un gaz inerte ou réducteur.

L'invention consiste donc à mélanger une poudre métallique avec une poudre de réfractaire infusible ou dont le point de fusion se situe à des températures suffisamment élevées par rapport à la température de la réaction de nitruration.

Ce mélange pulvérulent est d'abord porté à une température telle que, sous courant de gaz azoté et à pression voisine de la pression atmosphérique, la réaction de nitruration commence au moins en un point de la charge. Cette réaction démarre en général à une température supérieure à celle de fusion du métal; elle est rapide et exothermique et se poursuit d'elle-même sans qu'un apport de chaleur extérieur soit nécessaire; un tel apport peut cependant être utile pour améliorer l'homogénéité de ladite réaction. La pression peut cependant être proche mais supérieure à la pression atmosphérique pour éviter toute rentrée d'air parasite dans l'enceinte réactionnelle ou pour favoriser la montée en température du mélange de départ.

Bien que la température obtenue au début ou en cours de réaction soit habituellement supérieure à celle du point de fusion du métal, on n'observe aucun effet de fusion apparente dudit mélange quand on a une proportion correcte entre métal et réfractaire.

La réaction de nitruration étant rapide et exothermique et pour éviter qu'elle ne s'emballe (ce qui se ferait au détriment de la qualité du produit obtenu) on contrôle généralement sa température en jouant sur le débit du gaz azoté. Il est parfois indispensable de limiter la température de réaction pour éviter qu'elle n'atteigne la température de dissociation des nitrures formés.

Le courant gazeux peut lécher le mélange dans le four, ou de préférence percoler à travers lui, ce qui permet d'éviter une coalescence des grains en cours de réaction.

Le produit est obtenu sous forme de nitrures mélangés ou combinés avec le support réfractaire. Il se présente sous forme d'une masse solide très poreuse plus ou moins agglomérée, sans tenue mécanique. Le volume poreux dépasse largement 50% et le diamètre des pores dépend de la granulométrie des poudres de départ; il peut s'étendre de 1 µm à plus de 200 µm. La liaison entre les grains est peu résistante ce qui fait qu'on peut réduire aisément ladite masse sous forme de poudre par exemple par un simple délitage ou un broyage facile.

Les métaux particulièrement intéressants à nitrurer directement selon l'invention, sont plus particulièrement Al, Mg, Si (ce métal étant susceptible de subir des fusions locales lors de sa nitruration), plus généralement les alcalino-terreux... mais aussi leurs alliages ou leurs mélanges, en particulier ceux fusibles à basse température.

Le support réfractaire doit présenter une surface géométrique suffisamment importante et mouillable par le métal liquide que l'on veut nitrurer. Pour cette raison, il doit obligatoirement se présenter sous forme de poudre plus ou moins fine.

Sa nature chimique doit être choisie de telle façon qu'il ne réagisse pas avec le métal à nitrurer. Par contre, le nitrure formé au cours de la réaction peut se combiner avec le support réfractaire pour donner un composé non fusible dans les conditions de la réaction, comme par exemple les oxynitrures.

Ainsi on peut utiliser toutes sortes de supports réfractaires, par exemple les oxydes réfractaires tels que Al₂O₃, MgO, CaO, SiO₂,dolomie,... ou leurs composés, les nitrures, (tels que AlN, Si₃N₄), les carbures, les borures, les oxynitrures, les oxycarbures, les oxycarbonitrures, leurs mélanges réfractaires.

Ledit support réfractaire a généralement une granulométrie inférieure à 600 µm; celle du métal à nitrurer ne dépasse pas habituellement 2 mm et est de préférence inférieure à 1 mm. Elle peut être d'autant plus grossière que le point de fusion du métal à nitrurer est plus bas; par exemple les grains d'Al peuvent aller jusqu'à 1,2 mm alors qu'il est préférable de ne pas dépasser 0,16 mm pour Si qui fond à température beaucoup plus élevée.

La proportion des particules métalliques par rapport au support réfractaire divisé peut varier dans une large fourchette. Elle peut être très faible, 1% par exemple. A l'opposé il est impératif d'éviter toute fusion apparente en limitant à une valeur maximum la proportion de métal : il est difficile de dépasser 2/3 pour le rapport métal/(métal + support). En effet au-delà on risque la fusion apparente de la charge qui provoque un arrêt de la nitruration et donne comme produit final un mélange de nitrure et de métal non nitruré, ce qui n'est pas le but recherché.

Le choix du support réfractaire dépend de la nature du produit final que l'on veut fabriquer.
Ainsi on peut citer, non limitativement, différentes occurences:
- quand la poudre métallique à nitrurer est en présence d'un support réfractaire constitué d'une poudre de son oxyde, on obtient finalement un oxynitrure simple (par exemple Al en présence d'Al₂O₃ donne AlON, Mg en présence de MgO donne le mélange Mg₃N₂+MgO...)
- quand la poudre métallique est en présence d'un oxyde d'un autre métal, on obtient un oxynitrure double (par exemple Al en présence de MgO, donne un oxynitrure du type MgAlON pouvant être considéré comme un spinelle d'AlON, solution solide d'AlN dans MgO);
- quand la poudre métallique est en présence de son propre nitrure, on obtient un nitrure qui peut être de grande pureté (par exemple Al en présence d'AlN).
- quand la poudre métallique est en présence d'un mélange d'oxyde et de carbure on peut obtenir un oxycarbonitrure d'un même métal ou de métaux différents et...

On peut ainsi obtenir toutes sortes de composés à base de nitrures: des nitrures mixtes quand le support réfractaire est un nitrure d'un métal différent du métal à nitrurer, des composés mixtes nitrures-carbures, nitrures-borures, mais également des composés à partir d'un support qui est un mélange infusible de poudres réfractaires. On constate ainsi que de façon inattendue les métaux difficilement nitrurables à l'état liquide (en particulier Al et Mg) sont capables selon l'invention de se nitrurer complètement même à des températures supérieures à leur température de fusion à condition, comme cela a déjà été dit, de disperser la poudre métallique à nitrurer dans le solide réfractaire divisé qui présente une surface solide, inerte et suffisamment élevée.

Les produits pulvérulents obtenus selon l'invention, qu'ils soient des nitrures combinés ou mélangés avec le support réfractaire, peuvent être ensuite soumis à une fusion par exemple électrothermique. Ceci est particulièrement intéressant pour parfaire la combinaison du ou des nitrures obtenus avec le ou les supports réfractaires en vue d'obtenir par exemple un produit homogène. Les oxynitrures se prêtent bien à cette électrofusion pour donner des produits ayant des grandes qualités, par exemple de tenue à la corrosion à haute température etc...

Le procédé selon l'invention donne lieu en général à une réaction de nitruration auto-entretenue qui ne demande pas d'apport extérieur d'énergie, ce qui le rend économique.
On voit également que le procédé selon l'invention permet au moyen d'une technique simple d'obtenir une grande variété de produits à base de nitrures ou d'obtenir des nitrures dont la pureté ne dépend que de la pureté des produits consommables de départ. Cela est d'un grand intérêt en particulier pour produire de l'AlN pur avec facilité et en grande quantité.

### EXEMPLE 1

Cet exemple illustre l'obtention d'un oxynitrure simple.

On a mélangé 100 kg d'alumine en poudre inférieure à 100 µm avec 30 kg d'aluminium en poudre inférieure à 1,2 mm. Ce mélange a été placé dans un four étanche, dégazé sous vide, puis chauffé sous pression d'azote de 1 atm.
Vers 700°C la nitruration a démarré et l'on a maintenu la pression d'azote à 1 atm pour favoriser la montée en température de la charge. Bien que la réaction soit exothermique, le chauffage du four a été maintenu, ce qui a permis en fin d'opération d'atteindre 1750° C.

On a récupéré, en fin d'opération, 145 kg d'une masse poreuse homogène peu solide, constituée d'ALON. Cette masse a été refondue dans un four à arc équipé d'une cuve du type "water-jacket" et on n'a constaté aucun dégagement gazeux dans le bain. Le produit fondu a été coulé et refroidi. L'analyse a montré qu'il s'agit bien d'un oxynitrure d'aluminium contenant 10,1% d'azote.

### EXEMPLE 2

Cet exemple illustre l'obtention d'un oxynitrure double.

On a mélangé 40 kg d'une poudre d'aluminium (granulométrie moyenne de 1 mm environ) et 60 kg de poudre de magnésie broyée inférieure à 250 µm. Le mélange a été légèrement aggloméré, sous forme de grosses pastilles, pour en faciliter la manutention. Elles ont été introduites dans un four, dégazées, et chauffées jusqu'à 960°C sous atmosphère d'azote à pression atmosphérique. Après démarrage de la nitruration la température est montée à 1680°C. L'opération complète a duré 45 minutes. A aucun moment on n'a constaté de fusion apparente de la charge.
Le produit poreux obtenu contient un oxynitrure mixte MgAlON.

Un essai identique a été réalisé sans agglomérer le mélange de départ, on a obtenu le même produit sous forme d'une masse solide que l'on a aisément broyé sous forme d'une poudre d'environ 200 à 300 µm de granulométrie.

### EXEMPLE 3

Cet exemple illustre l'obtention du même produit selon une autre variante de procédé.

On a préparé un mélange de 38 kg de Mg en poudre (comprise entre 50 et 100 µm) et de 68 kg d'une poudre d'alumine (inférieure à 100 µm) que l'on a transformé en agglomérats. Celles-ci ont été chauffées jusqu'à 700°C sous atmosphère d'azote, puis la nitruration a démarré et la température a été limitée à 1100°C en régulant le débit d'azote. En 30 minutes la nitruration a été complète.
Les agglomérats obtenus sont constituées d'un mélange de Mg₃N₂, Al₂O₃ et d'oxynitrure mixte MgAlON.

De la même façon le mélange de départ non aggloméré a conduit à un solide poreux friable.

### EXEMPLE 4

Cet exemple illustre l'obtention d'AlN pur à partir d'un simple mélange de poudres.
On a préparé un mélange comportant 40% de poudre d'Al inférieure à 1 mm, et 60% de poudre d'AlN inférieure à 600 µm obtenue préalablement par un procédé de carbonitruration.

Ce mélange a été introduit dans un four, de petites dimensions, chauffé électriquement qui a été porté progressivement à 1300°C sous courant d'azote; à cette température la réaction de nitruration directe de l'aluminium a démarré brusquement provoquant une montée importante de température dans la charge jusqu'à 1700°C.

La transformation de l'aluminium en nitrure a été complète et rapide; la charge obtenue est agglomérée sans que l'on observe de trace de fusion et a été réduite en poudre par un léger broyage.

### EXEMPLE 5

Cet exemple illustre l'obtention d'AlN à partir de poudres agglomérées.

On est parti d'une poudre d'AlN obtenue dans l'exemple 4 de granulométrie inférieure à 600 µm mélangée à la poudre d'Al de l'exemple 4 dans les mêmes proportions.

Ce mélange a été aggloméré puis chauffé sous atmosphère d'azote comme précédemment.

La nitruration a commencé à 1200°C puis on a atteint une température de 1680°C.
La transformation a été complète et rapide.
Cette opération répétée, sans agglomération, avec de l'Al titrant 99,9% et de l'azote exempt d'O₂, a permis d'obtenir de l'AlN titrant 99,8% et moins de 0,1% d'Al non combiné.

### EXEMPLE 6

Cet exemple illustre l'obtention d'AlN dans un four industriel.

Un mélange pulvérulent de 6,8 t de même nature et proportions que dans l'exemple 5 a été introduit dans un four à chambre de grandes dimensions mis en surpression d'azote. La charge a été chauffée à l'aide d'un résistor de graphite noyé dans ledit mélange.

La réaction a démarré localement, et s'est ensuite étendue à toute la charge, le chauffage étant coupé.

La teneur en AlN du produit obtenu est de 99,3%.

### EXEMPLE 7

Cet exemple illustre l'obtention du nitrure d'un métal (Si) pouvant faire l'objet de fusion locale lors de sa nitruration directe. On comparera ainsi sa nitruration directe selon l'art antérieur et selon l'invention.
a) selon l'art antérieur:
   On a préparé 100 kg de silicium en poudre 0-160 µm sur lesquels on a prélévé une fraction de 50 kg que l'on a chauffé dans un four sous atmosphère d' azote. En régulant l'arrivée d'azote pour ne pas dépasser 1350°C environ, on a obtenu une masse frittée de Si₃N₄, contenant 6% environ de Si n'ayant pas réagi et présentant des microbilles principalement situées en son centre. Ces microbilles sont dues à des surchauffes et fusions locales pendant la réaction.
   Ainsi, bien que l'on n'ait pas en principe atteint le point de fusion du silicium, on constate cependant des fusions locales qui ont pour conséquence une nitruration incomplète du silicium.
b) selon l'invention:
   On a mélangé la deuxième fraction de 50 kg de poudre de Si avec 25 kg de poudre Si₃N₄, obtenue par broyage des zones extérieures de la masse obtenue précédemment et exemptes de Si libre.
   L'opération de nitruration de ce mélange a été reconduite dans des conditions identiques à celles de l'opération précédente.
   En fin d'opération la masse de Si₃ N₄ agglomérée obtenue contenait moins de 0,1% de Si libre, même dans la zone centrale de la masse.

## Revendications

1. Procédé d'obtention en grande quantité de composés à base de nitrure ou d'oxynitrure métallique, par nitruration directe d'au moins un métal en présence d'un support solide en produit réfractaire infusible, inerte vis-à-vis du métal, comportant le mélange en vrac d'une poudre d'au moins un métal susceptible de fondre à la température de la nitruration directe, sa granulométrie ne dépassant pas 2 mm, avec une poudre du support réfractaire ayant une granulométrie inférieure à 630 µm, caractérisé en ce que la quantité de métal dans le mélange de départ ne dépasse pas une teneur maximum, par rapport à la poudre réfractaire, au-delà de laquelle on observerait une fusion apparente du mélange, on chauffe ce mélange en vrac sous un courant de gaz azoté à pression sensiblement atmosphérique jusqu'à démarrer la réaction rapide et exothermique de nitruration du métal, laquelle se déroule à une température que l'on contrôle en jouant sur le débit de gaz azoté pour que ladite réaction s'auto-entretienne jusqu'à nitruration comlpète du métal sans que l'on note de trace de fusion apparente de la charge, et qu'on obtient un produit sous forme solide très poreux (volume poreux supérieur à 50 %) facile à égruger.

2. Procédé selon la revendication 1, caractérisé en ce que le métal a un point de fusion inférieur à la température de la nitruration directe.

3. Procédé selon la revendication 1, caractérisé en ce que le métal a un point de fusion supérieur à la température de la nitruration directe mais est susceptible de fondre lors de ladite nitruration directe, à la suite de surchauffes locales dans la masse en réaction.

4. Procédé selon l'une quelconque des revendications 2 ou 3, caractérisé en ce que les métaux sont Al,Mg,Si, leurs alliages ou leurs mélanges.

5. Procédé selon l'une quelconque des revendications 1 à 4, caractérisé en ce que la poudre réfractaire appartient au groupe des oxydes réfractaires ou leurs composés, des nitrures, des carbures, des borures, ou de leurs mélanges réfractaires.

6. Procédé selon l'une quelconque des revendications 1 à 5, caractérisé en ce que le gaz azoté est de l'azote pur ou dilué par un gaz neutre ou réducteur.

7. Procédé selon l'une quelconque des revendications 1 à 6, caractérisé en ce que le rapport métal/ (métal + support) ne dépasse pas environ 2/3.

8. Procédé selon l'une quelconque des revendications 1 à 7, caractérisé en ce que le mélange de départ est constitué d'un métal et de son nitrure pour obtenir un nitrure de grande pureté.

9. Procédé selon l'une quelconque des revendications 1 à 8, caractérisé en ce que le mélange de départ est constitué d'un métal et d'un oxyde réfractaire pour obtenir un oxynitrure simple ou mixte selon que l'oxyde est respectivement celui du métal ou d'un métal différent.

10. Procédé selon l'une quelconque des revendications 1 à 8, caractérisé en ce que, selon la nature du ou des métaux et du ou des réfractaires de départ, on obtient des nitrures mixtes ou des composés mixtes contenant des nitrures.

11. Procédé selon l'une quelconque des revendications 1 à 10, caractérisé en ce que les produits obtenus sont ultérieurement fondus.

## Claims

1. A process for obtaining a large quantity of compounds based on a metallic nitride or oxynitride by direct nitriding of at least one metal in the presence of a solid support of an infusible refractory product inert towards the metal, consisting of a bulk mixture of a powder of at least one metal fusible at the temperature of the direct nitriding, its particle size not exceeding 2 mm, with a refractory support powder having a particle size of less than 630 µm, characterised in that the guantity of metal in the starting mixture does not exceed a maximum content relative to the refractory powder, beyond which apparent fusion of the mixture would be observed, this mixture is heated in bulk under a stream of nitrogen gas at substantially atmospheric pressure until the rapid and exothermic nitriding reaction of the metal starts, which proceeds at a temperature which is controlled by varying the nitrogen gas rate in such a way that said reaction is self-sustaining up to complete nitriding of the metal, without a trace of apparent fusion of the charge being detectable, and that an easily ground product is obtained in a solid, very porous form (pore volume greater than 50%).

2. Process according to Claim 1, characterised in that the metal has a melting point lower than the direct nitriding temperature.

3. Process according to Claim 1, characterised in that the metal has a melting point higher than the direct nitriding temperature but is liable to melt during the said direct nitriding, due to local overheating in the reaction mass.

4. Process according to either of Claims 2 or 3, characterised in that the metals are Al, Mg, Si, their alloys or their mixtures.

5. Process according to any one of Claims 1 to 4, characterised in that the refractory powder belongs to the group comprising refractory oxides or their compounds, nitrides, carbides, borides or refractory mixtures thereof.

6. Process according to any one of Claims 1 to 5, characterised in that the nitrogen-containing gas is pure nitrogen or nitrogen diluted with a neutral or reducing gas.

7. Process according to any one of Claims 1 to 6, characterised in that the metal/(metal + support) ratio does not exceed approximately 2/3.

8. Process according to any one of Claims 1 to 7, characterised in that the starting mixture comprises a metal and its nitride in order to obtain a nitride of high purity.

9. Process according to any one of Claims 1 to 8, characterised in that the starting mixture comprises a metal and a refractory oxide in order to obtain a simple or mixed oxynitride depending on whether the oxide is, respectively, the oxide of the metal or that of a different metal.

10. Process according to any one of Claims 1 to 8, characterised in that, depending on the nature of the starting metal or metals and refractory or refractories, mixed nitrides or mixed compounds containing nitrides are obtained.

11. Process according to any one of Claims 1 to 10, characterised in that the products obtained are subsequently melted.

## Patentansprüche

1. Verfahren zur Herstellung von Verbindungen auf Basis von Metallnitrid oder -oxynitrid in großer Menge durch Direktnitrierung wenigstens eines Metalls in Gegenwart eines festen, gegenüber dem Metall inerten Trägers aus feuerfestem unschmelzbarem Stoff, das die Vermischung in loser Schüttung eines Pulvers wenigstens eines zum Schmelzen bei der Temperatur der Direktnitrierung geeigneten Metalls, dessen Größenordnung 2 mm nicht übersteigt, mit einem Pulver des feuerfesten Trägers mit einer Korngröße unter 630 µm vorsieht,
**dadurch gekennzeichnet,**
daß die Metallmenge im Ausgangsgemisch im Verhältnis zum feuerfesten Pulver einen Maximalgehalt nicht überschreitet, über dem man ein offensichtliches Schmelzen des Gemisches beobachten würde, man dieses lose Gemisch unter einem Strom stickstoffhaltigen Gases bei im wesentlichen atmosphärischem Druck erhitzt, bis die rasche und exotherme Nitrierungsreaktion des Metalls ausgelöst wird, welche bei einer Temperatur abläuft, die man durch Regulieren des stickstoffhaltigen Gasdurchsatzes so steuert, daß sich die Reaktion bis zur vollständigen Nitrierung des Metalls selbst aufrechterhält, ohne daß man eine Spur offensichtlichen Schmelzens der Charge bemerkt, und daß man ein Erzeugnis in fester, sehr poröser (Porenvolumen über 50 %), leicht zerstampfbarer Form erhält.

2. Verfahren nach dem Anspruch 1,
dadurch gekennzeichnet,
daß das Metall einen Schmelzpunkt unter der Temperatur der Direktnitrierung hat.

3. Verfahren nach dem Anspruch 1,
dadurch gekennzeichnet,
daß das Metall einen Schmelzpunkt über der Temperatur der Direktnitrierung hat, aber geeignet ist, während der Direktnitrierung in der Folge von örtlichen Überhitzungen in der reagierenden Masse zu schmelzen.

4. Verfahren nach einem der Ansprüche 2 oder 3, dadurch gekennzeichnet,
daß die Metalle Al, Mg, Si, deren Legierungen oder deren Mischungen sind.

5. Verfahren nach irgendeinem der Ansprüche 1 bis 4, dadurch gekennzeichnet,
daß das feuerfeste Pulver zur Gruppe der feuerfesten Oxide oder deren Verbindungen, der Nitride, der Karbide, der Boride oder deren feuerfesten Mischungen gehört.

6. Verfahren nach irgendeinem der Ansprüche 1 bis 5, dadurch gekennzeichnet,
daß das stickstoffhaltige Gas reiner oder durch ein neutrales oder reduzierendes Gas verdünnter Stickstoff ist.

7. Verfahren nach irgendeinem der Ansprüche 1 bis 6, dadurch gekennzeichnet,
daß das Metall/(Metall + Träger) -Verhältnis ungefähr 2/3 nicht übersteigt.

8. Verfahren nach irgendeinem der Ansprüche 1 bis 7, dadurch gekennzeichnet,
daß das Ausgangsgemisch aus einem Metall und dessen Nitrid besteht, um ein Nitrid großer Reinheit zu erhalten.

9. Verfahren nach irgendeinem der Ansprüche 1 bis 7, dadurch gekennzeichnet,
daß das Ausgangsgemisch aus einem Metall und einem feuerfesten Oxid besteht, um ein einfaches oder gemischtes Oxynitrid je nachdem zu erhalten, ob das Oxid das des Metalls oder eines verschiedenen Metalls ist.

10. Verfahren nach irgendeinem der Ansprüche 1 bis 8, dadurch gekennzeichnet,
daß man je nach der Art des oder der Ausgangsmetalle und des oder der feuerfesten Ausgangsstoffe Mischnitride oder Nitride enthaltende Mischverbindungen erhält.

11. Verfahren nach irgendeinem der Ansprüche 1 bis 10, dadurch gekennzeichnet,
daß die erhaltenen Erzeugnisse später geschmolzen werden.
